# EUROPÄISCHE PATENTSCHRIFT

(11) **EP 1 797 335 B1**
(45) Veröffentlichungstag und Bekanntmachung des Hinweises auf die Patenterteilung: **12.01.2011**
(21) Anmeldenummer: 05794485.2
(22) Anmeldetag: 06.10.2005
(51) Int. Cl.: F04D 29/66, F04D 27/02, F04D 19/04

(54) **SCHNELLDREHENDE VAKUUMPUMPE**
RAPIDLY ROTATING VACUUM PUMP
POMPE A VIDE TOURNANT RAPIDEMENT

(30) Priorität: 07.10.2004 DE 102004048866
(43) Veröffentlichungstag der Anmeldung: 20.06.2007
(73) Patentinhaber: Oerlikon Leybold Vacuum GmbH, 50968 Köln (DE)
(72) Erfinder: VÖLKER, Karl-Heinrich, 52445 Titz (DE); BEYER, Christian, 50765 Köln (DE); GREVEN, Alois, 41812 Erkelenz (DE)
(74) Vertreter: von Kreisler Selting Werner
(86) Internationale Anmeldenummer: PCT/EP2005/055033
(87) Internationale Veröffentlichungsnummer: WO 2006/040287

(56) Entgegenhaltungen:
- EP-A- 1 344 941
- WO-A1-03/100259
- WO-A1-03/100259
- DE-A1- 4 321 334
- DE-A1- 19 938 319
- JP-A- 2005 282 476
- JP-A- 2005 282 476
- JP-U- 4 127 419
- JP-U- 4 127 419
- US-A- 5 130 621
- US-B1- 6 474 949
- US-B1- 6 474 949

## Beschreibung

Die Erfindung besieht sich auf schnelldrehende Vakuumpumpen, beispielsweise Turbomolekularpurmpen.

Unter einer schnelldrehenden Vakuumpumpe werden vorliegend Vakuumpumpen mit Nenndrehzahlen ab 10.000 Umdrehungen/min, verstanden. Schnelldrehende Vakuumpumpen, beispielsweise Turbomolekularpumpen, werden in der Regel mit einer konstanten Nenndrehzahl bzw. Nenndrehfrequenz betrieben. Die Nenndrehfrequenz ist so gewählt, dass die Resonanzfrequenz bzw. die Resonanzfrequenzen der Vakuumpumpe hierdurch nicht angeregt werden. Während die Nenndrehfrequenz, mit der die Motorsteuerung den Antriebsmotor betreibt, praktisch immer gleich und konstant ist, können die Resonanzfrequenzen der Vakuumpumpe sich in Abhängigkeit von einer Vielzahl von Randbedingungen verändern. Die Resonanzfrequenz der Vakuumpumpe wird insbesondere beeinflusst durch Änderungen der Vakuumpumpen-Masse, -Federung und -Dämpfung. In Anlagen mit mehreren schnelldrehenden Vakuumpumpen, die alle auf einem einzigen Rahmen und auf diese Weise mechanisch miteinander verbunden sind, können sich die gleichfrequenten Schwingungen der Vakuumpumpen zu Schwingungen mit großer Amplitude addieren und/oder kann sich die Resonanzfrequenz einer oder mehrerer Vakuumpumpen so verändern, dass die betreffende Vakuumpumpe durch eine mit Nenndrehfrequenz laufende Vakuumpumpe angeregt wird. Wie Untersuchungen ergeben haben, ist bei den Lagern von Vakuumpumpen in derartigen Anlagen ein großer Verschleißanteil auf die beschriebenen Effekte zurückzuführen.

EP 1 344 941 A1 betrifft die Drehzahlsteuerung eines Vakuumpumpensystems. Um bei einem Vakuumpumpensystem mit einer Mehrzahl von Vakuumpumpen niederfrequente Vibrationen zu vermeiden, sollen die Drehzahlen und Phasen der rotierenden Elemente betreffender Vakuumpumpen einander angeglichen werden, um die Pumpen miteinander zu synchronisieren.

DE 199 38 319 A1 betrifft eine Steuerschaltung zur Steuerung der Drehzahl eines Elektromotors zum Antrieb eines Lüftergebläses in einer Gastherme.

Aufgabe der Erfindung ist es demgegenüber, eine Möglichkeit zu schaffen, bei schnelldrehenden Vakuumpumpen den durch Eigenschwingungen bedingten Verschleiß zu verringern.

Die Aufgabe wird gelöst durch die Merkmale des Vorrichtungsanspruches 1.

Gemäß dem Vorrichtungsanspruch 1 ist der Motorsteuerung eine aktivierbare Drehfrequenzkorrektur-Vorrichtung zugeordnet, die die Nenndrehfrequenz konstant um einen Drehfrequenzkorrektur-Betrag von maximal 10 % der Nenndrehfrequenz korrigiert, wenn die Drehfrequenzkorrektur-Vorrichtung aktiviert ist. Durch Vorsehen der Drehfrequenzkorrektur-Vorrichtung wird die Möglichkeit geschaffen, die an sich konstante Drehfrequenz des Antriebsmotors geringfügig zu verändern. Auf diese Weise kann präventiv oder bedarfsweise die Drehfrequenz des Antriebsmotors geringfügig verstimmt werden, was in aller Regel dazu ausreicht, ein bei der Nenndrehfrequenz aufgetretenes Resonanzverhalten der Vakuumpumpe abzustellen bzw., bei einer Anordnung mehrerer Vakuumpumpen auf einen gemeinsamen Rahmen, eine Addition und ein Aufschaukeln der generierten Schwingungen zu vermeiden. Um dies zu erreichen, ist ein Drehfrequenzkorrektur-Betrag von maximal 10 % der Nenndrehfrequenz völlig ausreichend. In der Regel reicht sogar ein Drehfrequenzkorrektur-Betrag von 0,5 - 2 % der Nenndrehfrequenz aus, um Resonanzerscheinungen und/oder ein Aufschaukeln von Schwingungen zu vermeiden. Auf diese Weise wird insbesondere der Verschleiß der Lager verringert.

Es ist ein Drehfrequenzkorrektur-Aktivator vorgesehen, der mit der Drehfrequenzkorrektur-Vorrichtung zu ihrer Aktivierung verbunden werden kann. Der Drehfrequenzkorrektur-Aktivator kann beispielsweise ein externes elektronisches Speicherelement sein, das elektrisch mit der Drehzahlkorrektur-Vorrichtung verbunden werden kann. Sobald der Drehfrequenzkorrektur-Aktivator mit der Drehzahlkorrektur-Vorrichtung verbunden ist, wird die Nenndrehfrequenz um einen in der Drehzahlkorrektur-Vorrichtung oder in dem Drehfrequenzkorrektur-Aktivator gespeicherten Betrag verringert.

Das externe elektronische Speicherelement ist als ein Dongle ausgebildet, das an eine elektrische Schnittstelle der Motorsteuerung bzw. der Drehfrequenzkorrektur-Vorrichtung anschließbar ist. Durch Anschluss des Dongle an die Schnittstelle wird auf einfache Weise eine Drehzahlkorrektur bewirkt. Es können Speicherelemente bzw. Dongles mit verschiedenen Drehzahlkorrektur-Beträgen zur Verfügung gestellt werden, so dass der Betrag und das Vorzeichen der Verstimmung der Nenndrehfrequenz gewählt werden kann.

Grundsätzlich kann die Regelvorrichtung sowohl in der Vakuumpumpe selbst als auch, insbesondere in Anlagen mit mehreren Vakuumpumpen, zentral in einer Steuerung für alle Vakuumpumpen gemeinsam vorgesehen sein.

Im folgenden werden unter Bezugnahme auf die Figuren zwei Ausführungsbeispiele der Erfindung näher erläutert.

Es zeigen:
- Fig. 1: ein Ausführungsbeispiel einer erfindungsgemäßen Vakuumpumpe, bei der die Drehfrequenzkorrektur durch ein Dongle aktiviert wird, und
- Fig. 2: ein B eines Verdichters, bei dem das Schwingungsverhalten durch einen Schwingungssensor überwacht wird.

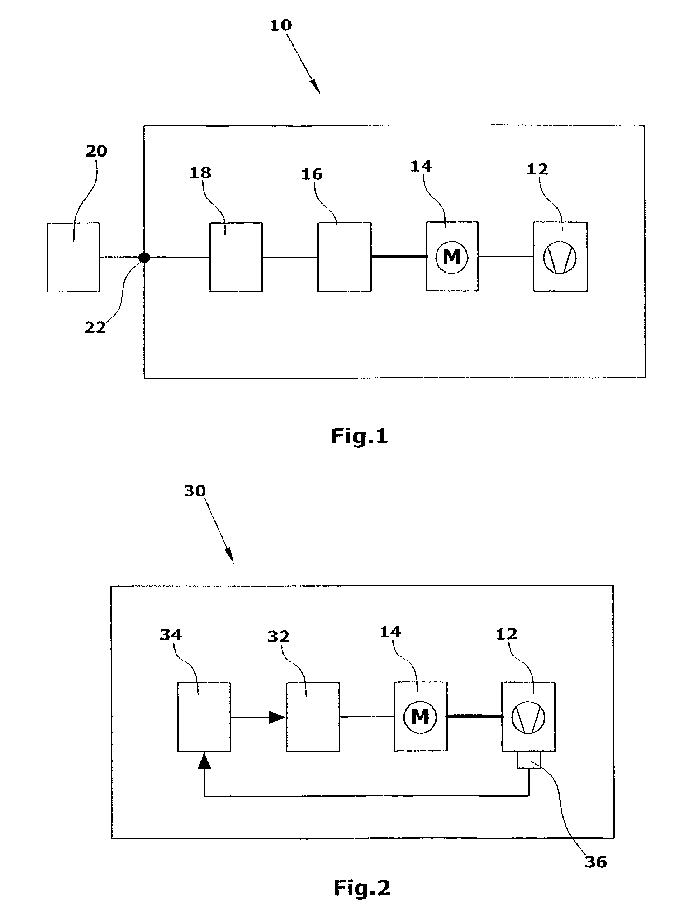

In der Figuren 1 und 2 ist jeweils eine als Turbomolekularpumpe ausgebildete schnelldrehende Vakuumpumpe 10; 30 dargestellt. Die schnelldrehende Vakuumpumpe kann auch als Radialverdichler ausgebildet sein. Die Vakuumpumpe 10;30 hat eine Nenndrehzahl von beispielsweise 30.000 Umdrehungen/min., was einer Drehfrequenz von 500 Hz entspricht. Die Vakuumpumpe 10;30 kann alleinstehend eingesetzt werden, kann jedoch auch Teit einer Anlage von 100 bis 120 Vakuumpumpen des selben Typs sein, die alle auf einem gemeinsamen Rahmen montiert sind. Derartige Anlagen werden beispielsweise bei der Glasbeschichtung eingesetzt.

Die Vakuumpumpe 10;30 weist einen Turbomolekular-Verdichter 12 auf, der von einem Antriebsmotor 14 angetrieben wird. Der Antriebsmotor 14 kann ein Gleichstrom- oder ein Wechselstrommotor sein.

Der Antriebsmotor 14 wird durch eine Motorsteuerung 16 angesteuert, durch die die Motorwicklungen bestromt werden. Die Motorsteuerung 16 betreibt den Antriebsmotor 14 mit konstanter Nenndrehfrequenz.

Die Vakuumpumpe 10 der Fig. 1 weist ferner eine Drehfrequenzkorrektur-Vorrichtung 18 auf, die durch einen Drehfrequenzkorrektur-Aktivator 20 aktivierbar ist. Durch die aktivierte Drehfrequenzkorrektur-Vorrichtung 18 wird die Motorsteuerung 16 zur Verstimmung der Nenndrehfrequenz veranlasst, beispielsweise dazu, die Drehfrequenz um einen Drehfrequenzkorrektur-Betrag von 10 Hz zu verstimmen.

Der Drehfrequenzkorrektur-Aktivator 20 ist ein elektronisches Speicherelement in Form eines sogenannten Dongles. Das Dongle wird bedarfsweise an eine parallele oder serielle Schnittstelle 22 angeschlossen, die mit der Drehfrequenzkorrektur-Vorrichtung 18 verbunden ist. In dem Drehfrequenzkorrektur-Aktivator 20 ist der Drehfrequenzkorrektur-Betrag elektronisch gespeichert.

Wenn der Drehfrequenzkorrektur-Aktivator 20 nicht an die Schnittstelle 22 angeschlossen ist, ist die Drchfrequenzkorrektur-Vorrichtung 18 nicht aktiviert, so dass die Motorsteuerung 16 den Antriebsmotor 14 mit der Nenndrehfrequenz betreibt. Sobald der Drehfrequenzkorrektur-Aktivator 20 an die Schnittstelle 22 der Drehfrequenzkorrektur-Vorrichtung 18 angeschlossen ist, wird die Drehfrequenz um den gespeicherten Betrag verringert.

In dem in Fig. 2 dargestellten Ausführungsbeispiel einer Vakuumpumpe 30 wird das Schwingungsverhalten der Vakuumpumpe 30 durch Steuern der Drehfrequenz des Antriebsmotors 14 geregelt. Hierzu ist an dem Verdichter 12 ein Schwingungssensor 36 befestigt, der die Frequenz und Amplitude der Eigenschwingungen des Verdichters 12 aufnimmt. Der Schwingungssensor kann auch an einem Gehäuseteil der Vakuumpumpe 30 angeordnet sein.

Der Schwingungssensor 36 ist verbunden mit der Drehfrequenzkorrektur-Vorrichtung 34, die die von dem Schwingungssensor 36 gelieferten Schwingungsinformationen auswertet und eine Drehfrequenzkorrektur aktiviert, wenn durch den Schwingungssensor 36 ein Überschreiten einer festgelegten Schwingungsamplitude des Verdichters 12 festgestellt wird. Werden durch den Schwingungssensor 36 zu starke Schwingungen detektiert, korrigiert die Drehfrequenzkorrektur-Vorrichtung 34 die Nenndrehfrequenz um einen Drehfrequenzkorrektur-Betrag von 10 Hz nach oben oder nach unten auf eine neue Motordrehfrequenz. Werden durch den Schwingungssensor 36 bei Betrieb des Antriebsmotors 14 mit der neuen Motordrehfrequenz unzulässig hohe Schwingungen detektiert, wird die Nenndrehfrequenz um einen zweiten Drehfrequenzkorrektur-Betrag verändert und der Antriebsmotor 14 mit der zweiten neuen Motordrehfrequenz betrieben.

In der Drehfrequenzkorrektur-Vorrichtung kann eine Regelvorrichtung vorgesehen sein, für die der Schwingungssensor 36 die Regelgröße liefert. Die Regelung der Motor-drehfrequenz kann auch stufenlos erfolgen, so dass die Motordrehfrequenz auf diese Weise stets möglichst nahe an der Nenndrehfrequenz liegt.

## Patentansprüche

1. Schnelldrehende Vakuumpumpe (10;30) mit
einem Verdichter (12),
einem Antriebsmotor (14) zum Antrieb des Verdichters (12), und
einer Motorsteuerung (16;32) zum Betrieb des Antriebsmotors (14) mit einer konstanten Nenndrehfrequenz,
wobei der Motorsteuerung (16;32) eine aktivierbare Drehfrequenzkorrektur-Vorrichtung (18;34) zugeordnet ist, die die Nenndrehfrequenz konstant um einen Drehfrequenzkorrektur-Betrag von maximal 10 % der Nenndrehfrequenz korrigiert, wenn die Drehfrequenzkorrektur-Vorrichtung (18;34) aktiviert ist,
und wobei ein Drehfrequenzkorrektur-Aktivator (20) vorgesehen ist, der mit der Drehfrequenzkorrektur-Vorrichtung (18) zu ihrer Aktivierung verbunden werden kann,
**dadurch gekennzeichnet,**
**dass** der Drehfrequenzkorrektur-Aktivator (20) ein Dongle ist, das an eine elektrische Schnittstelle (22) der Drehfrequenzkorrektur-Vorrichtung (18) anschließbar ist.

2. Schnelldrehende Vakuumpumpe (10) nach Anspruch 1, **dadurch gekennzeichnet, dass** der Drehfrequenzkorrektur-Aktivator (20) ein externes elektronisches Speicherelement ist, das elektrisch mit der Drehfrequenzkorrektur-Vorrichtung (18) verbindbar ist.

## Claims

1. A high rotational speed vacuum pump (10;30) comprising
a compressor (12),
a drive motor (14) for driving said compressor (12), and
a motor control unit (16;32) for operating said drive motor (14) at a constant nominal rotational frequency,
wherein an activatable rotational frequency correction device (18;34) is associated with said motor control unit (16;32), said correction device constantly correcting the nominal rotational frequency by a rotational frequency correction value of max. 10 % of the nominal rotational frequency when said nominal rotational frequency correction device (18; 34) is activated,
and wherein a rotational frequency correction activator (20) is provided which is connectable to the rotational frequency correction device (18) for activating the latter,
**characterized in that**
the rotational frequency correction activator (20) is a dongle which is connectable to an electric interface (22) of the rotational frequency correction device (18).

2. The high rotational speed vacuum pump (10) according to claim 1, **characterized in that** the rotational frequency correction activator (20) is an external electronic storage element which is electrically connectable to the rotational frequency correction device (18).

## Revendications

1. Pompe à vide (10; 30) tournant rapidement comprenant:
un compresseur (12),
un moteur d'entrainement (14) pour l'entrainement dudit compresseur (12), et
une commande de moteur (16; 32) pour l'opération dudit moteur d'entrainement (14) sur une fréquence de rotation nominale constante,
ladite commande de moteur (16; 32) étant associée à un dispositif de correction de fréquence de rotation (18; 34) activable qui corrige la fréquence de rotation nominale constamment par une valeur de correction de la fréquence de rotation de 10%, au maximum, de la fréquence de rotation nominale en état activé dudit dispositif de correction de fréquence de rotation (18; 34),
et un activateur de correction de la fréquence de rotation (20) étant prévu, qui est apte à être connecté au dispositif de correction de fréquence de rotation (18) pour activer celui-ci,
**caractérisée en ce que**
ledit activateur de correction de la fréquence de rotation (20) est un dongle apte à être connecté à une interface (22) dudit dispositif de correction de fréquence de rotation (18).

2. Pompe à vide (10) tournant rapidement selon la revendication 1, **caractérisée en ce que** ledit activateur de correction de la fréquence de rotation (20) est un élément mémoire électronique externe apte à être connecté électriquement audit dispositif de correction de fréquence de rotation (18).
